# EUROPEAN PATENT SPECIFICATION

(11) **EP 4 487 187 B1**
(45) Date of publication and mention of the grant of the patent: **04.11.2026**
(21) Application number: 22722375.7
(22) Date of filing: 05.04.2022
(51) Int. Cl.: G05B 19/418

(54) **PRIORITIZATION BETWEEN AGENTS IN AGENT-BASED PROCESS AUTOMATION**
PRIORISIERUNG ZWISCHEN AGENTEN IN DER AGENTENBASIERTEN PROZESSAUTOMATISIERUNG
PRIORISATION ENTRE DES AGENTS DANS UNE AUTOMATISATION DE PROCESSUS BASÉE SUR UN AGENT

(43) Date of publication of application: 08.01.2025
(73) Proprietor: Siemens Aktiengesellschaft, 80333 München (DE)
(72) Inventor: NANDOLA, Nareshkumar, Princeton, New Jersey 08540 (US); WENDELBERGER, Klaus Walter, 68789 St. Leon-Rot (DE)
(74) Representative: HKW Intellectual Property PartG mbB
(86) International application number: PCT/US2022/023392
(87) International publication number: WO 2023/195971

(56) References cited:
- WO-A1-2019/018015
- US-A1- 2019 041 832
- JIAFU WAN ET AL: "Artificial Intelligence-Driven Customized Manufacturing Factory: Key Technologies, Applications, and Challenges", ARXIV.ORG, CORNELL UNIVERSITY LIBRARY, 201 OLIN LIBRARY CORNELL UNIVERSITY ITHACA, NY 14853, 7 August 2021 (2021-08-07), XP091030942, DOI: 10.1109/JPROC.2020.3034808
- HERMANN KAINDL ET AL: "Self-Representation for Self-Configuration and Monitoring in Agent-Based Flexible Automation Systems", IEEE TRANSACTIONS ON SYSTEMS, MAN, AND CYBERNETICS: SYSTEMS, IEEE, PISCATAWAY, NJ, USA, vol. 43, no. 1, 1 January 2013 (2013-01-01), pages 164 - 175, XP011482330, ISSN: 2168-2216, DOI: 10.1109/TSMCA.2012.2192922

## Description

### TECHNICAL FIELD

The present disclosure relates to automating at least part of a process plant. In particular, disclosed embodiments are directed to an agent-based process automation, and specifically, to a method and system for prioritization between agents in agent-based process automation.

### BACKGROUND

Process plant automation may typically involve recording measurement signals from the physical process, evaluating automation logics (closed- and open-loop controls, including sequences and interlocks), and sending the corresponding commands to the process plant's actuators. The automation software may be run on a centralized automation server.

In traditional process plant automation, the automation software may be engineered manually by correspondingly experienced persons or automatically by using appropriate engineering tools. In case of manual engineering, significant engineering efforts may be required. Even in case of automated engineering, a manual adaptation of the generated engineering results is often unavoidable. For example, if the topology of the physical plant is changed, e.g., by adding or removing certain sensors or actuators, the engineering of the automation software must be changed accordingly. The same may apply if the requirements for automatic plant operation like recipes are modified. Additionally, the current engineering may not be valid anymore if certain sensors or actuators drop out. Thus, significant engineering efforts may be required in the beginning, as well as for any change in plant configuration later. Additionally, plant flexibility and availability may also be limited.

Furthermore, an engineering of the automation system may also be necessary regarding hardware. For example, automation cabinets may be required to be planned that contain the automation server and other components of the automation technology. The configuration of the cabling / connection of the field devices of the process plant to these automation cabinets may also comprise an important step in the hardware engineering of the automation system.

Newly developed approaches for architecture of automation systems, such as the NAMUR Open Architecture (NOA) and the Open Group, still require central servers on which the automation software runs and through which the orchestration of the components of the process plant may be carried out. These approaches also require hardware and software engineering of the automation system as described above, posing at least some or all of the aforementioned technical challenges.

US 2019/041832 A1 discloses a production module for a production plant has a first data interface, an electronic response device, and a second data interface. The first data interface receives a list of tasks for producing an article or substance from a production module positioned downstream in the production direction. The electronic response device responds to tasks from the list of tasks which can be carried out by the production module. The second data interface sends the list of tasks to a production module positioned upstream in the production direction.

WO 2019/018015 A1 provides systems and methods for generating a flow control plan for a plurality of components (in a flow control system. A decentralized multiagent control framework is used to plan and schedule for each agent independently without a central processor. Each agent of the multi-agent control framework separately optimizes a local portion of the system as a function of values for one or more parameters. Agents communicate with other connected agents, sharing values for parameters. The communication provides a negotiation and consensus for values of the shared parameters that are used by the agent to recalculate optimized parameters values for the local portion of the system.

### SUMMARY

Briefly, aspects of the present disclosure provide an agent-based process automation comprising a mechanism for prioritization between agents in agent-based process automation. The invention is defined by the attached set of claims. Further details of the disclosed method, devices and system are described below, which are helpful for understanding the claimed invention.

A first aspect of the disclosure provides a method for automating at least part of a process plant comprising a plurality of field components configured as self-organizing agents where each agent is configured to communicate with adjacently physically connected agents. The method comprises generating requests by requesting agents corresponding to respective present needs of the requesting agents. The method further comprises forwarding each request from the respective requesting agent to one or more responsible agents capable of reacting on the request via one or more paths in each case, wherein a path is defined as a chain of adjacently physically connected agents. The method further comprises reacting on the requests by responsible agents assigned based on a prioritization mechanism. The prioritization mechanism is established using a topological representation of the process plant by a process comprising: assigning a penalty value to each request, forwarding the request via one or more paths defined by the topological representation by evaluating an increment of the penalty value at each agent that forwards or reacts on the request depending on a type of the request and/or a type of the agent, whereby a penalty matrix is created indicative of how much penalty would be incurred if a particular request is reacted on by a given responsible agent, and using the penalty matrix to assign requests to responsible agents such that a total penalty value is minimized.

A second aspect of the disclosure provides a method for automating at least part of a process plant utilizing a simulation server. The method comprises simulating, by the simulation server, a plurality of field components of the process plant configured as self-organizing agents, where each agent is configured to communicate with adjacently physically connected agents. The method further comprises acquiring sensor signals from the process plant. The method further comprises, within the simulation, generating requests by requesting agents corresponding to respective present needs of the requesting agents, which are derived from the sensor signals acquired from the process plant. The method further comprises, within the simulation, forwarding each request from the respective requesting agent to one or more responsible agents capable of reacting on the request via one or more paths in each case, wherein a path is defined as a chain of adjacently physically connected agents. The method further comprises, within the simulation, assigning the requests to responsible agents based on a prioritization mechanism. The prioritization mechanism is established using a topological representation of the process plant by a process comprising: assigning a penalty value to each request, forwarding the request via one or more paths defined by the topological representation by evaluating an increment of the penalty value at each agent that forwards or reacts on the request depending on a type of the request and/or a type of the agent, whereby a penalty matrix is created indicative of how much penalty would be incurred if a particular request is reacted on by a given responsible agent, and using the penalty matrix to assign requests to responsible agents such that a total penalty value is minimized. The method further comprises generating appropriate actuator signals responsive to the sensor signals acquired from the process plant, based on the prioritized assignment of requests to responsible agents using the simulation.

A further aspect of the disclosure is directed to a computer program product for implementing the above-described method.

Additional technical features and benefits may be realized through the techniques of the present disclosure. Embodiments and aspects of the disclosure are described in detail herein and are considered a part of the claimed subject matter. For a better understanding, refer to the detailed description and to the drawings.

### BRIEF DESCRIPTION OF THE DRAWINGS

The foregoing and other aspects of the present disclosure are best understood from the following detailed description when read in connection with the accompanying drawings.
FIG. 1 illustrates a control system for a process plant according to a first aspect of the disclosure.
FIG. 2 illustrates a control system for a process plant according to a second aspect of the disclosure.
FIG. 3 shows a simplified topological representation of a process plant according to a first illustrative example.
FIG. 4 is a schematic illustration of request flow from various field components of the process plant represented in FIG. 3.
FIG. 5 shows a simplified topological representation of a process plant according to a second illustrative example.
FIG. 6 is a schematic illustration of request flow from various field components of the process plant represented in FIG. 5.

### DETAILED DESCRIPTION

To increase plant flexibility and availability and avoid engineering efforts, an agent-based process automation may be devised. An example of an agent-based process automation is disclosed in the International Patent Application No. PCT/EP2021/058528 filed on March 31, 2021, by the present applicant. In agent-based process automation, field components of the process plant, such as sensors, actuators, pipe nodes, etc., may be configured as self-organizing agents where each agent is configured to communicate with adjacently physically connected agents (i.e., neighboring agents connected directly via a respective pipe). An agent may have no information about the structure of the entire process plant and the automation requirements. Instead, each agent may be equipped with certain defined, relatively simple, basic functionalities, such as reacting on a request from adjacent agents or forwarding one or multiple requests to adjacent agents (upstream or downstream). The overall automation of the process plant may thus result from a swarm intelligence of the field components or agents. If the plant topology is changed, whether intentionally due to a conversion or unintentionally due to component failure, the agents may automatically reorganize themselves to create the plant automation again, as long as this is possible at all with the existing plant components.

In the agent-based process automation, it may be necessary for agents to prioritize requests in case they receive multiple requests from adjacent agents. The present disclosure provides a solution that can fill this gap via a systematic method of defining such priorities automatically, using information from a topological representation of the process plant, such as a piping and instrumentation diagram (P&ID), and forming some basic rules. Thus, the present disclosure may augment agent-based process automation by making it more autonomous and reducing manual effort in defining such priorities.

First, certain terms used in the present description in connection with agent-based process automation will be explained.

A "swarm" refers to a number (more than two) of field components having certain defined basic functionalities.

A "field component" refers to a part of the process plant which interacts with the process. A field component can be, for example, a sensor, an actuator, a compound component which may have both sensor and actuator functionalities, a package unit or process module (process equipment assemblies), or a pipe node.

A "pipe node" may be defined by an intersection of pipes, or an inlet or outlet of certain plant components, such as tanks, heat exchangers, etc. A pipe node may be considered at each pipe intersection. Whether a pipe node is needed to be considered for an inlet or outlet of a plant component may be decided individually for each type of plant component.

An "agent" refers to a single individual of a swarm which has certain defined basic functionalities. Thus, in a swarm of field components, an agent is one field component.

A "request" refers to information about a certain need of one agent in the process plant. The "request" may carry the information about the need itself, the information about the agent it stems from and the path (chain of agents) via which the information was received.

A "reaction" refers to performance of a certain activity by an agent in order to fulfill the request of another agent.

An "adjacently physically connected" agent or field component refers to an agent or field component that is directly connected topologically to a particular agent or field component, e.g., via a respective pipe. In the context of a simulation, this term is used to refer to a simulated direct physical connection between simulated agents or field components.

For the purpose of swarm intelligence, the basic functionalities of each agent may include:
- identifying its present needs and informing adjacently physically connected field components about the present needs via corresponding requests,
- forwarding requests which a field component has received from a further adjacently physically connected field component to all other adjacently physically connected field components,
- performing reactions to requests a field component has received from other field components, if the field component has the capability to do so, and
- confirming a fulfillment of requests which a field component has received from other field components if the field component has the capability to do so.

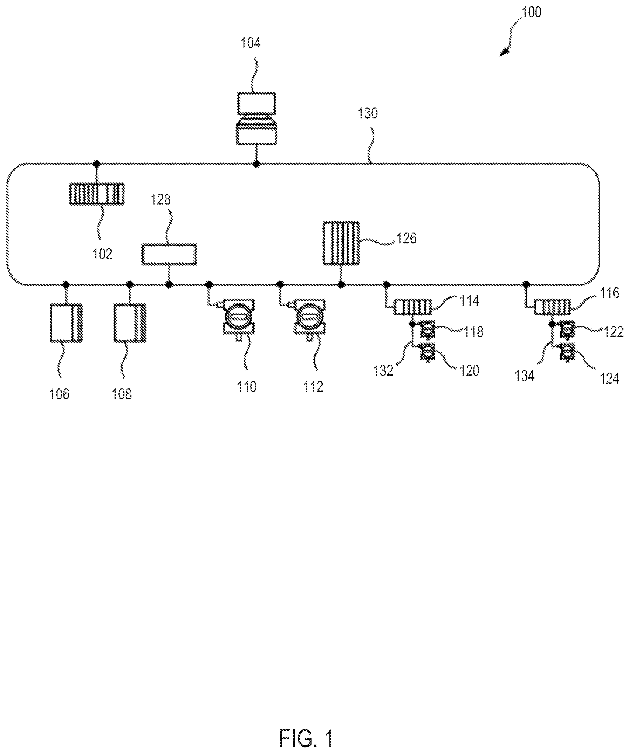

Turning now to the disclosed embodiments, FIG 1 shows a part of a control system 100 for a process plant according to a first aspect of the disclosure. The control system 100 may comprise an operator station server 102 and an operator station client 104. Further, the control system 100 may comprise a plurality of field components, herein including package units 106, 108, sensors/actuators 110, 112, and IO-racks 114, 116 each carrying one or several IO-modules which may be connected to further field components (e.g., sensors/actuators 118, 120, 122, 124). In addition, the control system 100 may optionally comprise an automation server 126 and a pipe node server 128.

A communication network may be established between the field components via hardwired connections (e.g., including physical buses) and/or wireless connections (e.g., using Wi-Fi). For example, as shown, the operator station server 102, the operator station client 104, the sensors/actuators 110, 112, the two IO-racks 114, 116, the automation server 126 and the pipe node server 128 may be connected to one another via a bus 130, and optionally, to other components of the control system 100, not shown. For the purpose of operating and monitoring, a user or operator can access the operator station server 102 or other operator station servers (not shown) via the operator station client 104 via the bus 130. The bus 130 can, without being limited thereto, be designed, for example, as an Industrial Ethernet. The sensors/actuators 118, 120 may be connected to an IO-module in one IO-rack 114 via a field bus or via wires 132. Analogously, the sensors/actors 122, 124 may be connected to an IO-module in the other IO-rack 116 via a field bus or via wires 134. Field buses 132, 134 can be designed, without being limited thereto, for example, as an Industrial Ethernet. The bus 130 may thus provide a communication network between the single field components 106, 108, 110, 112, and via the IO-modules in the IO-racks 114, 116, also to the field components 118, 120, 122, 124 of the control system 100. There can also be wireless connections between the field components 106, 108, 110, 112, 118, 120, 122, 124 alternatively or in addition to hardwired connections.

The automation server 126 may be used for registering input sensor signals from the process plant, archiving the signals, communicating with the operation station server 102, sending output signals to the actuators in case of manual operations and so on. The disclosed embodiment does not require any orchestration software, as it is known from state-of-the-art automation control systems, to be running on the automation server 126.

There could still be a necessity of an operator station (server and client) to allow the operator of the process plant to interact with the process. This can include, for example, the visualization of process values and also the possibility to define setpoints or to drive actuators manually. How a process plant shall be automated may not depend on the physical setup of the process plant only. Process plants with the same setup might be automated differently. A certain process plant might run in different operation modes requesting different automatic controls. The definition of corresponding boundary conditions for plant automation, like specific operation modes, can be possible via the operation station (server/client) 102, 104. The operator station (server/client) 102, 104 may also handle the input/ output-signals and organize the interaction between the operator station (server/client) 102, 104 and the field components 106, 108, 110, 112, 118, 120, 122, 124.

To allow an agent-based process automation as it is described herein, each field component configured as an agent needs the information about other agents to which it is adjacently physically connected, i.e., via pipe. Thereby, the single agents / field components do not need all information about the topology of the overall process plant. For example, each pipe section may be individually identified, for example, via RFID or QR-code. Once a field component 106, 108, 110, 112, 118, 120, 122, 124, i.e., an agent, is connected to a pipe, the information to exactly which pipe section the connection was established may be read and stored in the agent / field component 106, 108, 110, 112, 118, 120, 122, 124. Based on this information, by communicating to each other the agents can identify all other agents, which are connected to the same pipe section. In other embodiments, there could be a superordinate server, which includes a topological representation of the process plant, such as a P&ID, and provides to each agent the information about its physical neighbors.

The field components, including the sensors/actuators 110, 112, 118, 120, 122, 124, as well as the pipe nodes (not shown in FIG. 1) may be configured as self-organizing agents by way of a respective piece of software that can be executed to realize the defined basic functionalities of an agent. The piece of software may run on the field component itself, if the field component has a required processing capability. For some agents, such as pipe nodes, the piece of software representing the agent may run on another device, such as another field component (e.g., a field component that is physically close to the pipe node), or on an edge device, or on a server of the process plant (e.g., on the optional pipe node server 128). Thereby, pipe nodes can act and react as "normal" field components.

Agent-based process automation may be implemented by generating requests by "requesting" agents corresponding to respective present needs of the requesting agents. The requesting agents can comprise, for example, sensors. In examples, a request may be generated by a sensor based on a deviation of a measured value from a setpoint. The setpoint may be defined by an operator of the process plant, for example, via the operation station (server/client) 102, 104. Alternately, the setpoint may be defined in an automated way by a superordinate system of the process plant, such as the automation server 126 (e.g., a time series of setpoints may be provided via a superordinate recipe). Each request may be forwarded from the respective requesting agent to one or more "responsible" agents capable of reacting on the request via one or more paths in each case. The responsible agents may comprise actuators. A path is defined as a chain of adjacently physically connected agents.

The disclosed methodology is characterized in that the requests may be assigned to responsible agents based on a prioritization mechanism established using information from a topological representation (e.g., P&ID) of the process plant, as described in detail below. The responsible agents may thereby react on the requests which are respectively assigned to them based on the prioritization mechanism. In examples, the prioritization mechanism may be implemented as a software module running on a superordinate system of the process plant (e.g., the automation server 126), or on an edge device, or on one of the field components of the process plant.

In some embodiments, software representations of the agents may be implemented as part of an agent simulation on a simulation server. This can make it possible to implement aspects of the proposed agent-based process automation without having to modify hardware of existing field components that may lack the required processing capability to execute the defined basic functionalities.

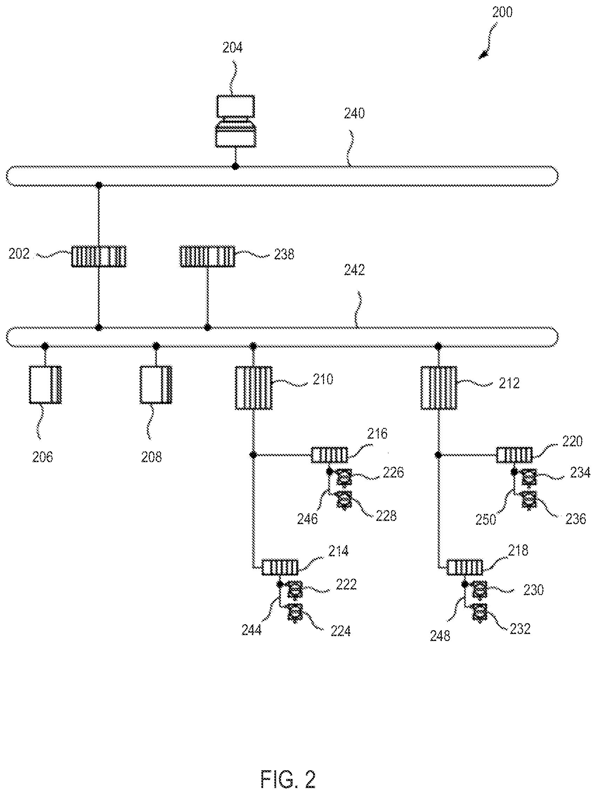

Accordingly, FIG 2 shows a part of a control system 200 for a process plant according to a second aspect of the disclosure. The control system 200 may comprise an operator station server 202 and an operator station client 204. Further, this example control system 200 may comprise package units 206, 208. The control system 200 may also comprise automation servers 210, 212, which may be connected to IO-racks 214, 216, 218, 220 respectively carrying IO-modules. The IO-modules in the IO-racks 214, 216, 218, 220 may be connected to further field components (e.g., sensors/actuators 222, 224, 226, 228, 230, 232, 234, 236). Additionally, as per this embodiment, the control system 200 may comprise an agent simulation server 238.

A communication network may be established between the field components via hardwired connections (e.g., including physical buses) and/or wireless connections (e.g., using Wi-Fi). For example, as shown, the operator station server 202 and the operator station client 204 may be connected to one another via a terminal bus 240, and optionally, to other components of the control system 200, not shown. The operator station server 202, the package units 206, 208, the automation servers 210, 212, and the agent simulation server 238 may be connected to one another via a plant bus 242, and optionally, to other components of the control system 200, not shown. For the purpose of operating and monitoring, a user or operator can access the operator station server 202 or other operator station servers (not shown) via the operator station client 204 via of the terminal bus 240. The terminal bus 240 can, without being limited thereto, be designed, for example, as an Industrial Ethernet. The sensors/actors 222, 224, 226, 228, 230, 232, 234, 236 may be connected to the IO-modules 214, 216, 218, 220 via a field bus or via wires 244, 246, 248, 250 respectively. The field buses 244, 246, 248, 25 can be designed, without being limited thereto, for example, as an Industrial Ethernet. The terminal bus 240, plant bus 242 and the field buses 244, 246, 248, 25 can provide a communication network between the single field components 206, 208, 222, 224, 226, 228, 230, 232, 234, 236 of the control system 200. There can also be wireless connections between the components 206, 208, 210, 212, 222, 224, 226, 228, 230, 232, 234, 236, 238 alternatively or in addition to hardwired connections.

The registration of sensor signals and output of actuator signals may be realized as in state-of-the-art control systems. Also, the setup concerning operating and monitoring may not be necessarily changed. The automation servers 210, 212 may still exist, but they need not be used anymore to run the automation logics. Therefore, the server load can be reduced, making it possible to use lesser number of automation servers 210, 212 compared to state-of-the-art control systems.

The agent simulation server 238 may comprise a computer program product to simulate the field components 206, 208, 222, 224, 226, 228, 230, 232, 234, 236 and realize an agent-based process automation of the process plant. For this purpose, the agent simulation server 238 may include the plant topology, for example, as P&ID or another type of topological representation. Pipe nodes can also be simulated by the agent simulation server 238.

In the present embodiment, an agent-based process automation may be implemented by simulating, by the agent simulation server 238, the plurality of field components 206, 208, 222, 224, 226, 228, 230, 232, 234, 236 which are configured as self-organizing agents. A communication network between the agents may be simulated, where each agent can communicate with adjacently physically connected agents. Sensor signals acquired via the sensors of process plant may be provided as input to the simulation. Within the simulation, requests may be generated by "requesting agents" (e.g., sensors) corresponding to respective present needs of the requesting agents, which may be derived from the sensor signals acquired from the process plant (e.g., based on a deviation of a measured value from a defined setpoint, as described above). Furthermore, within the simulation, each request may be forwarded from the respective requesting agent to one or more "responsible" agents (e.g., actuators) capable of reacting on the request via one or more paths in each case.

According to the disclosed methodology, within the simulation, requests may be assigned to responsible agents based on a prioritization mechanism which is established using information from a topological representation (e.g., P&ID) of the process plant, as described in detail below. Appropriate actuator signals may thereby be generated responsive to the sensor signals acquired from the process plant, based on the prioritized assignment of requests to responsible agents using the simulation. The prioritization mechanism may be implemented, in this case, as a software module as part of the simulation running on the agent simulation server 238.

The proposed prioritization mechanism can be used to systematically decide pairing between requests and responsible agents that shall react on a particular request. For that purpose, a penalty matrix-based approach has been developed, which can systematically increase a penalty value of a request as it flows through various agents.

The prioritization mechanism may be established as follows. For each request, an initial penalty value is assigned to that request. The initial penalty value can, for example, be zero. The request may be forwarded via one or more paths defined by a topological representation / P&ID that represents a current topology of the process plant. An increment of the penalty value may be evaluated at each agent that forwards or reacts on the request depending on a type of the request and/or a type of that agent. The "increment" can be a positive value or zero.

In various embodiments, different methodologies may be used for evaluating an increment of the penalty value of a request based on the type of the request and/or the agent that forwards or reacts on the request. According to one suitable embodiment, as applied to the illustrated examples, the evaluation methodology can include:
- for a sensor, the penalty value of a request is not increased if the sensor forwards the request;
- for a pipe node, the penalty value of a request is increased if the request is forwarded from a main pipe to two or more branches;
- for an actuator, if the actuator is a valve, then the penalty value of a mass flow request is not increased if the valve reacts on it, and the penalty value of a pressure request is increased if the valve reacts on it;
- for an actuator, if the actuator is a pump, then the penalty value of a pressure request is not increased if the pump reacts on it, and the penalty value of a mass flow is increased if the pump reacts on it;
- for any actuator, the penalty value is not increased for a request which is simply forwarded by the actuator without being reacted on.

At least some of the pipe nodes of the process plant may be configured as agents capable of translating the requests received from adjacently physically connected agents and forwarding the translated requests to other adjacently physically connected agents. An example of a request translation may include translating a temperature request into a mass flow request and forwarding the mass flow request to a valve connected to a heat exchanger. The translation of a received request may be dependent on a type of the respective received request and the type of the pipe node, e.g., the pipe node at the inlet of a tank will translate the tank level request to a mass flow request at the tank inlet.

Thus, via different P&ID paths, a given request can reach several responsible agents that can potentially react on it with same or different penalty values. Based on the above, a penalty matrix may be created which can indicate how much cost or penalty would be incurred if a particular request is reacted to by a given responsible agent (actuator). An illustrative structure of a penalty matrix is shown in Table 1 below. The penalty matrix may be used to assign requests to responsible agents such that a total penalty value is minimized. An optimal assignment may be determined, for example, using a mixed integer optimization routine.

**Table 1**

| | **Actuator 1** | **Actuator 2** | ... |
|---|---|---|---|
| **Request 1** | Penalty 11 | Penalty 12 | ... |
| **Request 2** | Penalty 21 | Penalty 22 | ... |
| ... | ... | ... | ... |

The determination of penalty values for each possible pair of a request and a responsible agent and the optimization of the corresponding penalty matrix may require a large amount of computing resources in a real process plant, which might have hundreds or thousands of sensors and actuators. To address this challenge, in one suitable implementation of the disclosed methodology, in each path defined by the topological representation (e.g., P&ID), the forwarding of a request may be stopped at an actuator that is capable of reacting on the request. Here, an actuator may be considered as "capable" of reacting on the request if the actuator is not occupied already by another request at a lower penalty value, or if the corresponding request has reached another actuator, via another path, such that the other actuator can react on the corresponding request at a lower penalty value. This approach may be reasonable since a further forwarding of the request would further increase the penalty value, although an actuator which can react on the request at a lower penalty value was already found. Therefore, it is highly unlikely that a pairing, which would result from a further forwarding of the request, would be part of a total optimal solution. The examples illustrated below use the above-described approach.

In a more general expression of the disclosed methodology, it may be defined that in each path defined by the topological representation (e.g., P&ID), the forwarding of a request is stopped after '*n*' such actuators, which are "capable" (as described above) of reacting on the request, are found. In this case, *'n'* can be natural number greater than or equal to 1. Increasing *'n'* may increase the computing power but may also increase the likelihood that a total optimum solution is found. Thus, there may exist a trade-off between optimality and computation. However, *n*=1 can be a very reasonable selection and may lead to an optimal solution in most (if not all) cases anyway.

The disclosed methodology may be better understood in the context of illustrative examples.

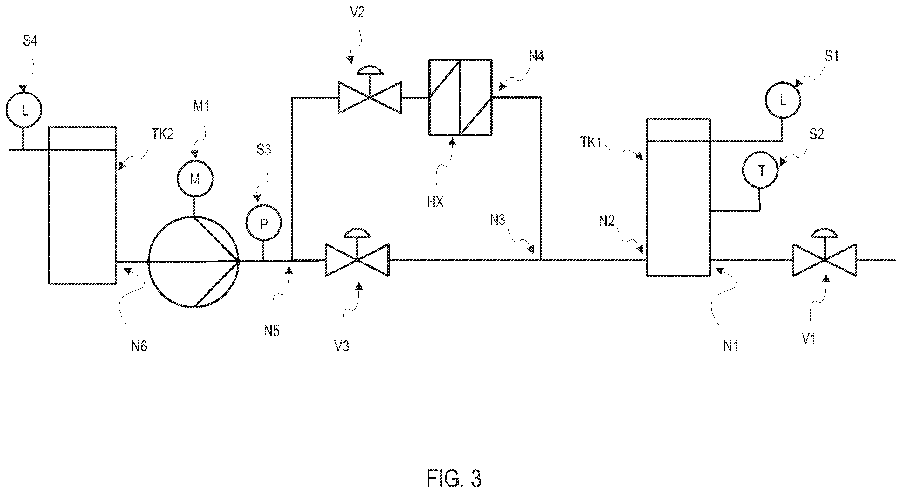

FIG. 3 shows a topological representation (i.e., P&ID) of a process plant according to a first illustrative example. The illustrated process plant comprises field components that include actuators V1, V2, V3 and M1, sensors S1, S2, S3 and S4, pipe nodes N1, N2, N3, N4, N5 and N6, tanks TK1 and TK2, and heat exchanger HX. The actuators V1, V2, V3 comprise valves, while the actuator M1 comprises a pump. The sensor S1 comprises a level sensor for measuring fluid level in the tank TK1, the sensor S2 comprises a temperature sensor for measuring temperature inside the tank TK1, the sensor S3 comprises a pressure sensor for measuring outlet pressure of the pump M1, and the sensor S4 comprises a level sensor for measuring fluid level in the tank TK2. The pipe nodes N1 and N2 are respectively defined by an outlet and an inlet of the tank TK1, the pipe node N4 is defined by an outlet of the heat exchanger HX, the pipe node N6 is defined by an outlet of the tank TK2, while the pipe nodes N3 and N5 are defined by intersection of pipes.

In the present example, the process plant may have a total of four requests generated by requesting agents (sensors), S1, S2, S3, and S4. In this case, the respective requests are the differences between the related measured sensor values and the corresponding setpoints, i.e., requests for an increase or decrease of the corresponding process values. One or multiple of these requests, namely, S1 request, S2 request, S3 request and S4 request, can be addressed by one or more responsible agents (actuators) V1, V2, V3 and M1.

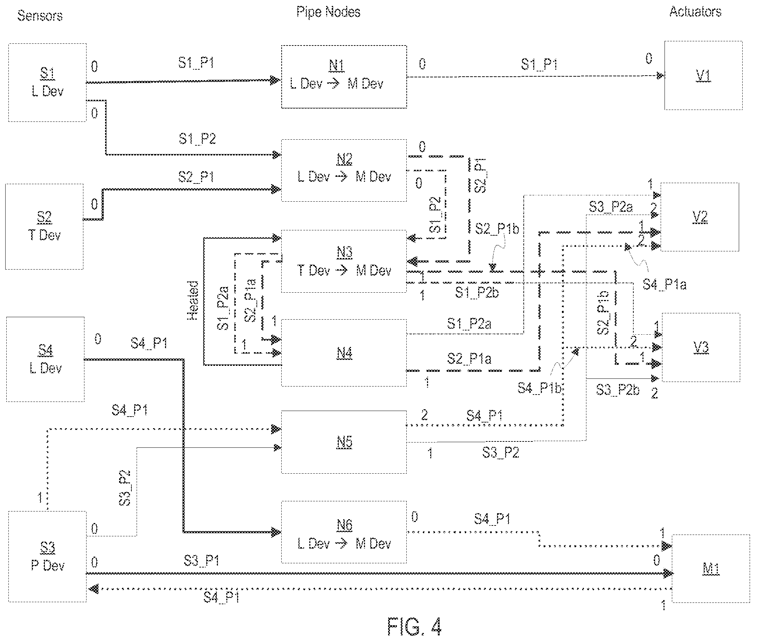

FIG. 4 represents a flow of requests through various field components shown in FIG. 3, showing how the penalty value of each request may change (from its initial value 0) as it flows. FIG. 4 may be best understood referring jointly to FIG. 3. In this example, *n=1* is used to determine a responsible agent at which forwarding of a request is stopped. In FIG. 4, the dashed or dotted lines represent a translation of the original request by a pipe node.

Referring to FIG. 4, the S1 request is generated by sensor S1 which is defined by a level deviation (L Dev). S1 request can reach actuator V1 along a path S1_P1, via pipe node N1. The pipe node N1 translates the level request (L Dev) into a mass flow request (M Dev) and forwards the mass flow request to V1 with no increase in penalty value (i.e., penalty value = 0). The S1 request can also reach V2 along path S1_P2 and then branching to path S1_P2a, via pipe nodes N2 (which translates L Dev to M Dev), N3 and N4. The penalty value is increased by 1 as the request is forwarded via pipe node N3 (forwarding from main pipe to pipe branch), such that the S1 request has a penalty value 1 when it reaches V2. The S1 request can also reach V3 along path S1_P2 and then branching to path S1_P2b via pipe nodes N2 and N3. Again, the penalty value is increased by 1 as the request is forwarded via pipe node N3 (forwarding from main pipe to pipe branch), such that the S1 request has a penalty value 1 when it reaches V3.

The S2 request is generated by sensor S2 which is defined by a temperature deviation (T Dev). The S2 request can reach V2 along path S2_P1 and then branching to path S2_P1a, via N2, N3 (which translates T Dev to M Dev) and N4. The S2 request can also reach V3 along path S2_P1 and then branching to path S2_P1b, via N2 and N3 (which translates T Dev to M Dev). As before, the penalty value is increased by 1 as the request is forwarded via N3, such that the S2 request reaches both V2 and V3 with a penalty value 1.

The S3 request is generated by sensor S3 which is defined by a pressure deviation (P Dev). The S3 request can reach actuator M1 directly along path S3_P1 with no increase in penalty value (i.e., penalty value = 0). The S3 request can also reach actuators V2 and V3. The S3 request can reach V2 along path S3_P2 and then branching to path S3_P2a, via N5. The S3 request can reach V3 along path S3_P2 and then branching to path S3_P2b, via N5. In each of the two paths, the penalty value is increased by 1 when the request is forwarded via N5 (forwarding from main pipe to pipe branch), and further increased at the respective actuator V2, V3 as they are valves that are to react on a pressure request. S3 request thus reaches both V2 and V3 with a penalty value 2 in each case.

The S4 request is generated by sensor S4 which is defined by a level deviation (L Dev). The S4 request can reach M1 along path S4_P1 via pipe node N6 (which translates L Dev to M Dev). The penalty value is increased by 1 at M1 as it is a pump that is to react on a mass flow request from N6. The S4 request thus reaches M1 at penalty value 1. However, the S4 request along path S4_P1 does not stop at M4 as M4 can react to another request (i.e., S3 request) at a lower value. Continuing along path S4_P1, the S4 request can reach V2 and V3 via N5, along paths S4_P1a and S4_P1b respectively. The penalty value of the S4 request is further increased by 1 as it is forwarded via N5, such that it reaches both V2 and V3 at penalty value 2.

Note that in FIG. 4, it could have been possible to show the forwarding of S4 request by V2 and V3. However, upon reaching pipe node N2, there would be no further actuator that could react on this request. Therefore, for keeping the drawing simple, this path was neglected in the figure.

Based on the above, a penalty matrix may be created, as represented below in Table 2. In the shown penalty matrix, an 'X' is entered when: a request does not reach the corresponding responsible agent; or the corresponding agent is not capable of addressing the particular request; or there is no influence of the agent on that request.

**Table 2**

| | **V1** | **V2** | **V3** | **M1** |
|---|---|---|---|---|
| **S1 Request** | 0 | 1 | 1 | X |
| **S2 Request** | X | 1 | 1 | X |
| **S3 Request** | X | 2 | 2 | 0 |
| **S4 Request** | X | 2 | 2 | 1 |

In many scenarios, such as in the present example, a mixed integer optimization routine based on the penalty matrix may not be necessary as each responsible agent (actuator) can decide, at the agent level, which request it should address by choosing the request with the least penalty value. In the present example, V1 would choose to react on S1 request as it is the only request which reaches this actuator and M1 would choose to react on S3 request as this request has the least penalty value. V2 and V3 would both react on S2 request and S4 request since S1 request is already addressed by V1, which results in a special condition called multiple-input-multiple-output (MIMO). A MIMO condition may not affect determination optimal assignments at the agent level, such as described above. However, a MIMO condition may lead to infeasible solutions when using a mixed integer optimization routine. An example solution to the above challenge has been disclosed later in this description.

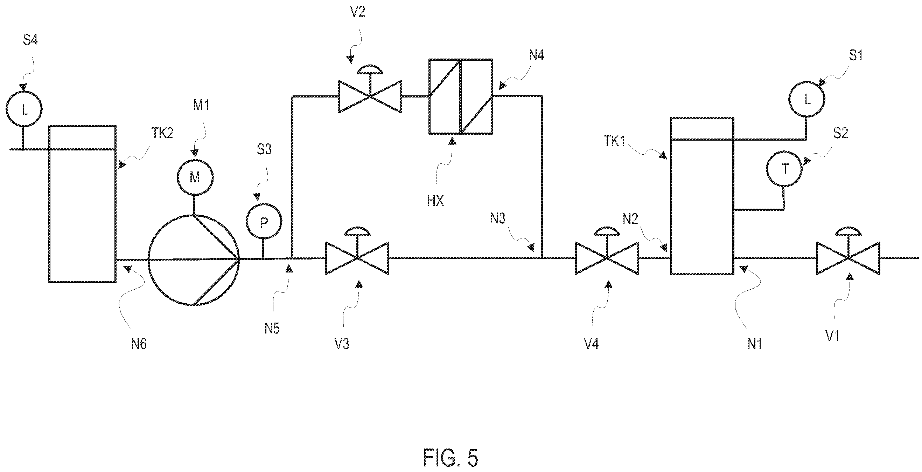

FIG. 5 shows a topological representation (i.e., P&ID) of a process plant according to a second illustrative example. The process plant in this example is slightly modified in relation to FIG. 3, with the addition of the actuator (valve) V4. The remaining field components including actuators V1, V2, V3 and M1, sensors S1, S2, S3 and S4, pipe nodes N1, N2, N3, N4, N5 and N6, tanks TK1 and TK2, and heat exchanger HX are identical to the previous example and will not be described again.

As in the previous example, the process plant in this case may also have a total of four requests generated by requesting agents (sensors), S1, S2, S3, and S4. In this case also, the respective requests are the differences between the related measured sensor values and the corresponding setpoints, i.e., requests for an increase or decrease of the corresponding process values. One or multiple of these requests, namely, S1 request, S2 request, S3 request and S4 request, can be addressed by one or more responsible agents (actuators) V1, V2, V3, V4 and M1.

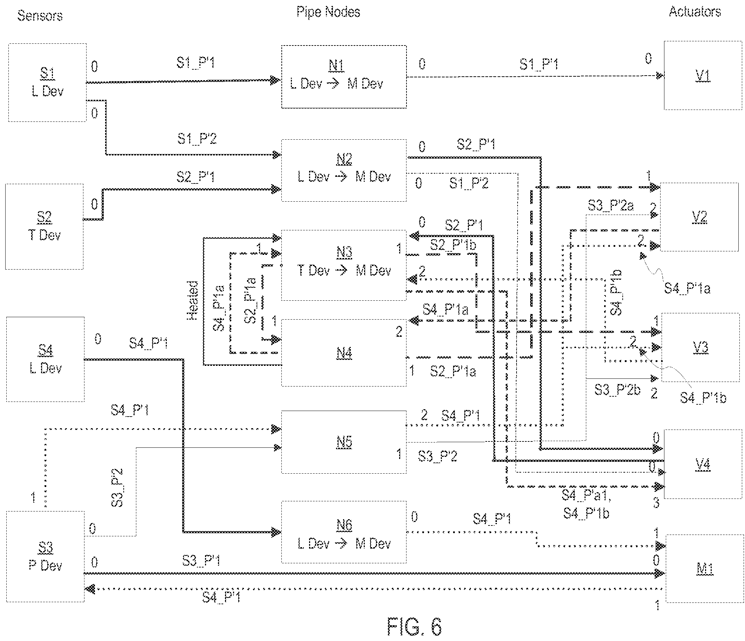

FIG. 6 represents a flow of requests through various field components shown in FIG. 5, showing how the penalty value of each request may change (from its initial value 0) as it flows. FIG. 6 may be best understood referring jointly to FIG. 5. In this example, *n=1* is used to determine a responsible agent at which forwarding of a request is stopped. In FIG. 6, the dashed or dotted lines represent a translation of the original request by a pipe node. The modified request flow in FIG. 6 may be understood relying on the basic understanding from the previous example (shown in FIG. 4) on how requests are forwarded, translated and penalty values incremented. Redundant explanations are avoided for brevity.

Referring to FIG. 6, the S1 request can reach actuator V1 along a path S1_P'1 with no increase in penalty value (i.e., penalty value = 0), in the same manner as in the previous example. The S1 request can also reach V4 along path S1_P'2 with no translation or increase in penalty value (i.e., penalty value = 0).

The S2 request can reach V2 and V3 along path S2_P' 1 via V4 (which cannot react on it) and N3, and then branching respectively to paths S2_P'1a (via N4) and S2_P'1b. The penalty value is increased in each path by 1 as the request is forwarded via N3, such that the S2 request reaches both V2 and V3 with a penalty value 1.

The S3 request can reach M1 directly along path S3_P'1 with no increase in penalty value (i.e., penalty value = 0) and can reach V2 and V3 with a penalty value 2 in each case, in the same manner as in the previous example (along path S3_P'2 and its branches S3_P'2a and S3_P'2b respectively).

The S4 request can reach V2 and V3 with a penalty value of 2 in each case, in the same manner as in the previous example (along path S4_P'1 and its branches S4_P' 1a and S4_P'1b respectively). However, in this example, the S4 request may be forwarded by both V2 and V3, such that it reaches V4 in each case with a penalty value 3, as shown, along paths S4_P1'a and S4_P1'b respectively.

Note that in this second example, V2 and V3 have forwarded the S4 request although they could potentially react on it, because they also get the S2 request at a lower penalty value than the S4 request. However, they do not forward the S3 request, because this request reaches another actuator (M1) at a lower penalty value than V2 and V3.

Based on the above, a penalty matrix may be created, as represented below in Table 3. As before, in the shown penalty matrix, an 'X' is entered when: a request does not reach the corresponding responsible agent; or the corresponding agent is not capable of addressing the particular request; or there is no influence of the agent on that request.

**Table 3**

| | **V1** | **V2** | **V3** | **V4** | **M1** |
|---|---|---|---|---|---|
| **S1 Request** | 0 | X | X | 0 | X |
| **S2 Request** | X | 1 | 1 | X | X |
| **S3 Request** | X | 2 | 2 | X | 0 |
| **S4 Request** | X | 2 | 2 | 3 | 1 |

As in the previous example, an optimal assignment of requests to responsible agents may be determined locally at the agent level by each responsible agent, using the penalty matrix, without the need to execute a mixed integer optimization routine. In the present example, V1 chooses to react on S1 request as it is the only request which reaches this actuator, M1 chooses to react on S3 request as this request has the least penalty value, V4 chooses to react on S4 request since S1 request is already addressed by V1, and V2 and V3 choose to react on S2 request as this request has the least penalty value.

The prioritization mechanism may thus be established based on a current topology of the process plant. The prioritization mechanism may be automatically adapted by updating the penalty matrix, for example, when the topology of the process plant is changed. The topology of the process plant may change, for instance, due to an intentional change or modification of the plant (e.g., adding / removing field components), due to a component failure, among other reasons.

In addition to topological changes, other instances may also trigger an update to the penalty matrix. For example, there may be an instance when control of a field component (e.g., actuator) is taken over by an operator of the process plant. In such instances, that particular field component may be removed from the topological representation (e.g., P&ID) used to create the penalty matrix. As another example, there might be an instance when a new request is generated by a field component. Such an instance may occur, for example, in the following scenario: A valve, which is typically operated at 10% - 90 % open position (for maximum reliability), may generate a new pressure request at input, if it is required to operate at above 90% open position. In such scenarios, the penalty matrix may be re-created based on the additional new request.

In some scenarios, such as illustrated in the examples above, the assignment of requests to responsible agents using the penalty matrix may be carried out at an agent level by each responsible agent. Especially in bigger plants, where more complex situations can arise, a mixed integer optimization routine may be executed to derive the optimal assignments of requests. In this case, the penalty matrix may be provided as an input to the mixed integer optimization routine, which may derive an optimal assignment of the requests to the responsible agents to minimize the total penalty value, subject to the constraints:
- all requests reach at least one responsible agent, and
- no responsible agent is assigned to more than one request.

According to one example architecture, the assignment of requests to responsible agents using the penalty matrix may be carried out at an agent level by each responsible agent and the mixed integer optimization routine may be executed on a need basis, being triggered in the event of a conflicting assignment at the agent level. According to another example architecture, a mixed integer optimization routine may be executed irrespective of the situation. This would not change the results in comparison to the agent level assignment for nonconflicting situations, whereas for conflicting situations, it can resolve the optimal assignment problem automatically.

In case of multiple-input-multiple-output (MIMO) systems, a mixed integer optimization routine may provide an infeasible solution because of the second constraint of the optimization problem, namely, no responsible agent is assigned to more than one request. For example, considering again the example of the process plant represented in FIG. 3, a MIMO condition arises where the actuators V2 and V3 should react on S2 request and S4 request in a coordinated way, i.e., work in opposite directions to influence the temperature but not the mass flow, work in the same direction to influence the mass flow but not the temperature. To address such a situation, the penalty matrix may be post processed based on identified MIMO pairs.

In a first step of the post-processing, the initial penalty matrix created using the topological representation may be analyzed to identify a MIMO condition where a plurality of requests have the same set of responsible agents assigned. As described above, a MIMO condition may be identified when two actuators should work in the same direction to react on a first request and the same two actuators should work in opposite directions to react on a second request. The two requests and two actuators may thereby form a MIMO pair. Thus, referring again to the example of FIG. 3, the S2 request (temperature) and the S4 request (level) can both be controlled by actuators V2 and V3, as per the penalty matrix shown in Table 2. The special situation defining a MIMO condition here is that one request (S4 request) would be reacted on by two actuators (V2, V3) with the same sign and a second request (S2 request) would be reacted on by the same two actuators (V2, V3) with a different sign (+/-).

In the next step of the post-processing, the penalty matrix may be adjusted by lumping the requests of the MIMO pair as a single request and lumping the set of responsible agents (actuators) of the MIMO pair as a single responsible agent. Thus, multiple rows (corresponding to all requests identified in the previous step) and multiple columns (corresponding to the set of responsible agents identified in the previous step) may be reduced to one row and one column respectively in the adjusted penalty matrix. For example, Table 4 shows an adjusted penalty matrix derived based on identified MIMO pairs in the penalty matrix shown in Table 2.

**Table 4**

| | **V1** | **{V2, V3}** | **M1** |
|---|---|---|---|
| **S1 Request** | 0 | 1 | X |
| **{S2, S4} Request** | X | 2 | X |
| **S3 Request** | X | 2 | 0 |

In connection with Table 4, note that since S2 request does not reach M1, the combination {S2, S4} request also does not reach M1, thus the corresponding 'X' in the adjusted penalty matrix. Further, since S4 request has a penalty value of 2 at V2 and V3, the combination {S2, S4} request also has a penalty value of 2, i.e., the maximum of all single penalty values is considered.

The adjusted penalty matrix may be provided as the input to the mixed integer optimization routine to derive an optimal assignment of the requests to the responsible agents to minimize the total penalty value, subject to the constraints, namely: all requests reach at least one responsible agent, and no responsible agent is assigned to more than one request. In the example of FIG. 3, the optimization problem may thus consider a single variable {S1, S4} and a single variable {V2, V3} instead of the two variables S1, S2 and the two variables V2, V3 respectively.

The embodiments of the present disclosure may be implemented with any combination of hardware and software. In addition, the embodiments of the present disclosure may be included in an article of manufacture (e.g., one or more computer program products) having, for example, a non-transitory computer-readable storage medium. The computer readable storage medium has embodied therein, for instance, computer readable program instructions for providing and facilitating the mechanisms of the embodiments of the present disclosure. The article of manufacture can be included as part of a computer system or sold separately.

The computer readable storage medium can include a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. Computer readable program instructions described herein can be downloaded to respective computing/processing devices from a computer readable storage medium or to an external computer or external storage device via a network, for example, the Internet, a local area network, a wide area network and/or a wireless network.

The system and processes of the figures are not exclusive. Other systems, processes and menus may be derived in accordance with the principles of the disclosure to accomplish the same objectives. Although this disclosure has been described with reference to particular embodiments, it is to be understood that the embodiments and variations shown and described herein are for illustration purposes only. Modifications to the current design may be implemented by those skilled in the art, without departing from the scope of the appended claims.

## Claims

1. A method for automating at least part of a process plant comprising a plurality of field components (206, 208, 222, 224, 226, 228, 230, 232, 234, 236) configured as self-organizing agents where the plurality of field components (206, 208, 222, 224, 226, 228, 230, 232, 234, 236) configured as agents comprises actuators (V1, V2, V3, M1), each agent is configured to communicate with adjacently physically connected agents, the method comprising:
generating requests by requesting agents corresponding to respective present needs of the requesting agents,
forwarding each request from the respective requesting agent to one or more responsible agents capable of reacting on the request via one or more paths in each case, wherein the responsible agents comprise the actuators (V1, V2, V3, M1) and a path is defined as a chain of adjacently physically connected agents, and
reacting on the requests by responsible agents assigned based on a prioritization mechanism, wherein the prioritization mechanism is established using a topological representation of the process plant by a process comprising:
assigning a penalty value to each request,
forwarding the request via one or more paths defined by the topological representation by evaluating an increment of the penalty value at each agent that forwards or reacts on the request depending on a type of the request and/or a type of the agent,
whereby a penalty matrix is created indicative of how much penalty would be incurred if a particular request is reacted on by a given responsible agent, and
using the penalty matrix to assign requests to responsible agents such that a total penalty value is minimized, wherein, in each path defined by the topological representation, the forwarding of a request is stopped at an actuator (V1, V2, V3, M1) that is capable of reacting on the request, wherein an actuator (V1, V2, V3, M1) is considered as capable of reacting on the request if the actuator (V1, V2, V3, M1) is not occupied already by another request at a lower penalty value, or the corresponding request has reached another actuator (V1, V2, V3, M1), via another path, wherein said other actuator (V1, V2, V3, M1) can react on the corresponding request at a lower penalty value.

2. The method according to claim 1, wherein
each field component configured as an agent comprises information about other agents to which it is adjacently physically connected; or
the process plant further comprises superordinate server, which includes a topological representation of the process plant, and provides to each agent the information about its physical neighbors.

3. The method according to any of claims 1 and 2, wherein the request comprises information about the agent it stems from and the path via which the information was received.

4. The method according to any of claims 1 to 3, wherein the plurality of field components (206, 208, 222, 224, 226, 228, 230, 232, 234, 236) configured as agents further comprise sensors (S1, S2, S3, and S4).

5. The method according to claim 4, wherein the requesting agents comprise the sensors (S1, S2, S3, and S4), and wherein each request is generated based on a deviation of a measured value from a setpoint, wherein the setpoint is defined by an operator of the process plant or, in an automated way, by a superordinate system of the process plant.

6. The method according to any of claims 4 to 5, wherein the plurality of field components (206, 208, 222, 224, 226, 228, 230, 232, 234, 236) configured as agents further comprise pipe nodes (N1, N2, N3, N4, N5, N6), at least some of the pipe nodes (N1, N2, N3, N4, N5, N6) of the process plant are configured as agents capable of translating the requests received from adjacently physically connected agents and forwarding the translated requests to other adjacently physically connected agents,
the translation of a received request being dependent on a type of the respective received request and a type of the respective pipe node (N1, N2, N3, N4, N5, N6).

7. The method according to claim 6, wherein evaluating an increment of the penalty value at each agent that forwards or reacts on the request depending on a type of the request and/or a type of the agent comprises:
for a sensor (S1, S2, S3, and S4), not increasing the penalty value of a request if the sensor forwards the request,
for a pipe node (N1, N2, N3, N4, N5, N6), increasing the penalty value of a request if the request is forwarded from a main pipe to two or more pipe branches,
for an actuator (V1, V2, V3, M1),
if the actuator (V1, V2, V3) is a valve, then not increasing the penalty value of a mass flow request if the valve reacts on it, and increasing the penalty value of a pressure request if the valve reacts on it,
if the actuator (M1) is a pump, then not increasing the penalty value of a pressure request if the pump reacts on it, and increasing the penalty value of a mass flow request if the pump reacts on it, and
not increasing the penalty value of a request which is forwarded by the actuator (V1, V2, V3, M1) without being reacted on.

8. The method according to any of claims 1 to 7, comprising adaptively establishing the prioritization mechanism by updating the penalty matrix in the instance of:
a topology of the process plant being changed, or
control of a field component being taken over by an operator of the process plant, or
a new request being generated by a field component.

9. The method according to any of claims 1 to 8, wherein, in each path defined by the topological representation, the forwarding of a request is stopped after finding n actuators that are capable of reacting on the request, *n* being a natural number greater than 1.

10. The method according to any of claims 1 to 9, wherein the prioritization mechanism is implemented as a software module running on a superordinate system of the process plant, or on an edge device, or on one of the field components (206, 208, 222, 224, 226, 228, 230, 232, 234, 236) of the process plant.

11. The method according to any of claims 1 to 10, wherein assigning requests to responsible agents comprises using the penalty as an input to a mixed integer optimization routine to derive an optimal assignment of the requests to the responsible agents to minimize the total penalty value, subject to the constraints:
all requests reach at least one responsible agent, and
no responsible agent is assigned to more than one request.

12. The method according to any of claims 1 to 10, wherein assigning requests to responsible agents comprises:
analyzing the penalty matrix to identify a multiple-input-multiple-output condition where a plurality of requests have the same set of responsible agents assigned,
adjusting the penalty matrix by lumping the plurality of requests as a single request and lumping the set of responsible agents as a single responsible agent,
using the adjusted penalty as an input to a mixed integer optimization routine to derive an optimal assignment of the requests to the responsible agents to minimize the total penalty value, subject to the constraints:
all requests reach at least one responsible agent, and
no responsible agent is assigned to more than one request.

13. The method according to any of claims 11 and 12, wherein the assignment of requests to responsible agents using the penalty matrix is carried out at an agent level by each responsible agent, and wherein the mixed integer optimization routine is triggered in the event of a conflicting assignment at the agent level.

14. A method for automating at least part of a process plant utilizing a simulation server (238), the method comprising:
simulating, by the simulation server (238), a plurality of field components (206, 208, 222, 224, 226, 228, 230, 232, 234, 236) of the process plant configured as self-organizing agents, where the plurality of field components (206, 208, 222, 224, 226, 228, 230, 232, 234, 236) configured as agents comprises actuators (V1, V2, V3, M1), each agent is configured to communicate with adjacently physically connected agents,
acquiring sensor signals from the process plant,
within the simulation, generating requests by requesting agents corresponding to respective present needs of the requesting agents, which are derived from the sensor signals acquired from the process plant,
within the simulation, forwarding each request from the respective requesting agent to one or more responsible agents capable of reacting on the request via one or more paths in each case, wherein the responsible agents comprise the actuators (V1, V2, V3, M1) and a path is defined as a chain of adjacently physically connected agents,
within the simulation, assigning the requests to responsible agents based on a prioritization mechanism, wherein the prioritization mechanism is established using a topological representation of the process plant by a process comprising:
assigning a penalty value to each request,
forwarding the request via one or more paths defined by the topological representation by evaluating an increment of the penalty value at each agent that forwards or reacts on the request depending on a type of the request and/or a type of the agent,
whereby a penalty matrix is created indicative of how much penalty would be incurred if a particular request is reacted on by a given responsible agent, and
using the penalty matrix to assign requests to responsible agents such that a total penalty value is minimized, wherein, in each path defined by the topological representation, the forwarding of a request is stopped at an actuator (V1, V2, V3, M1) that is capable of reacting on the request, wherein an actuator (V1, V2, V3, M1) is considered as capable of reacting on the request if the actuator (V1, V2, V3, M1) is not occupied already by another request at a lower penalty value, or the corresponding request has reached another actuator (V1, V2, V3, M1), via another path, wherein said other actuator (V1, V2, V3, M1) can react on the corresponding request at a lower penalty value, and
generating appropriate actuator signals responsive to the sensor signals acquired from the process plant, based on the prioritized assignment of requests to responsible agents using the simulation.

15. A non-transitory computer-readable storage medium including instructions that, when processed by a simulation server (238), configure the simulation server (238) to perform the method according to claim 14.

## Patentansprüche

1. Verfahren zum Automatisieren zumindest eines Teils einer Prozessanlage, die mehrere Feldkomponenten (206, 208, 222, 224, 226, 228, 230, 232, 234, 236) umfasst, die als selbstorganisierende Agenten ausgelegt sind, wobei die als Agenten ausgelegten mehreren Feldkomponenten (206, 208, 222, 224, 226, 228, 230, 232, 234, 236) Aktuatoren (V1, V2, V3, M1) umfassen, wobei jeder Agent dazu ausgelegt ist, mit angrenzend physisch verbundenen Agenten zu kommunizieren, wobei das Verfahren Folgendes umfasst:
Erzeugen von Anforderungen durch anfordernde Agenten, die jeweiligen aktuellen Bedürfnissen der anfordernden Agenten entsprechen,
Weiterleiten jeder Anforderung von dem jeweiligen anfordernden Agenten an einen oder mehrere zuständige Agenten, die in der Lage sind, jeweils über einen oder mehrere Pfade auf die Anforderung zu reagieren, wobei die zuständigen Agenten die Aktuatoren (V1, V2, V3, M1) umfassen und ein Pfad als eine Kette von aneinandergrenzend physisch verbundenen Agenten definiert ist, und
Reagieren auf die Anforderungen durch zuständige Agenten, die basierend auf einem Priorisierungsmechanismus zugewiesen werden, wobei der Priorisierungsmechanismus unter Verwendung einer topologischen Darstellung der Prozessanlage durch einen Prozess eingerichtet wird, umfassend:
Zuweisen eines Strafwerts zu jeder Anforderung,
Weiterleiten der Anforderung über einen oder mehrere durch die topologische Darstellung definierte Pfade durch Bewerten eines Inkrements des Strafwerts an jedem Agenten, der die Anforderung weiterleitet oder auf diese reagiert, in Abhängigkeit von einer Art der Anforderung und/oder einer Art des Agenten,
wobei eine Strafmatrix erstellt wird, die angibt, wie hoch die Strafe wäre, wenn ein gegebener zuständiger Agent auf eine bestimmte Anforderung reagiert, und
Verwenden der Strafmatrix zum Zuweisen von Anforderungen zu zuständigen Agenten so, dass ein Gesamtstrafwert minimiert wird, wobei in jedem durch die topologische Darstellung definierten Pfad die Weiterleitung einer Anforderung an einem Aktuator (V1, V2, V3, M1) gestoppt wird, der in der Lage ist, auf die Anforderung zu reagieren, wobei ein Aktuator (V1, V2, V3, M1) dann als in der Lage betrachtet wird, auf die Anforderung zu reagieren, wenn der Aktuator (V1, V2, V3, M1) nicht bereits durch eine andere Anforderung mit einem niedrigeren Strafwert belegt ist oder die entsprechende Anforderung über einen anderen Pfad einen anderen Aktuator (V1, V2, V3, M1) erreicht hat, wobei der andere Aktuator (V1, V2, V3, M1) auf die entsprechende Anforderung mit einem niedrigeren Strafwert reagieren kann.

2. Verfahren nach Anspruch 1, wobei
jede als ein Agent ausgelegte Feldkomponente Informationen über andere Agenten umfasst, mit denen sie angrenzend physisch verbunden ist; oder
die Prozessanlage ferner einen übergeordneten Server umfasst, der eine topologische Darstellung der Prozessanlage umfasst und jedem Agenten die Informationen über seine physischen Nachbarn bereitstellt.

3. Verfahren nach einem der Ansprüche 1 und 2, wobei die Anforderung Informationen über den Agenten, von dem sie stammt, und den Pfad, über den die Informationen empfangen wurden, umfasst.

4. Verfahren nach einem der Ansprüche 1 bis 3, wobei die mehreren als Agenten ausgelegten Feldkomponenten (206, 208, 222, 224, 226, 228, 230, 232, 234, 236) ferner Sensoren (S1, S2, S3 und S4) umfassen.

5. Verfahren nach Anspruch 4, wobei die anfordernden Agenten die Sensoren (S1, S2, S3 und S4) umfassen, und wobei jede Anforderung basierend auf einer Abweichung eines Messwerts von einem Sollwert erzeugt wird, wobei der Sollwert durch einen Bediener der Prozessanlage oder auf automatisierte Weise durch ein übergeordnetes System der Prozessanlage definiert wird.

6. Verfahren nach einem der Ansprüche 4 bis 5, wobei die als Agenten ausgelegten mehreren Feldkomponenten (206, 208, 222, 224, 226, 228, 230, 232, 234, 236) ferner Rohrknoten (N1, N2, N3, N4, N5, N6) umfassen, wobei zumindest einige der Rohrknoten (N1, N2, N3, N4, N5, N6) der Prozessanlage als Agenten ausgelegt sind, die in der Lage sind, die von angrenzend physisch verbundenen Agenten empfangenen Anforderungen zu übersetzen und die übersetzten Anforderungen an andere angrenzend physisch verbundene Agenten weiterzuleiten,
wobei die Übersetzung einer empfangenen Anforderung von einer Art der jeweiligen empfangenen Anforderung und einer Art des jeweiligen Rohrknotens (N1, N2, N3, N4, N5, N6) abhängt.

7. Verfahren nach Anspruch 6, wobei das Bewerten eines Inkrements des Strafwerts an jedem Agenten, der die Anforderung weiterleitet oder auf diese reagiert, in Abhängigkeit von einer Art der Anforderung und/oder einer Art des Agenten Folgendes umfasst:
bei einem Sensor (S1, S2, S3 und S4), kein Erhöhen des Strafwerts einer Anforderung, wenn der Sensor die Anforderung weiterleitet,
bei einem Rohrknoten (N1, N2, N3, N4, N5, N6), Erhöhen des Strafwerts einer Anforderung, wenn die Anforderung von einer Hauptleitung an zwei oder mehr Rohrverzweigungen weitergeleitet wird,
bei einem Aktuator (V1, V2, V3, M1),
wenn der Aktuator (V1, V2, V3) ein Ventil ist, dann kein Erhöhen des Strafwerts einer Massendurchflussanforderung, wenn das Ventil darauf reagiert, und Erhöhen des Strafwerts einer Druckanforderung, wenn das Ventil darauf reagiert,
wenn der Aktuator (M1) eine Pumpe ist, dann kein Erhöhen des Strafwerts einer Druckanforderung, wenn die Pumpe darauf reagiert, und Erhöhen des Strafwerts einer Massendurchflussanforderung, wenn die Pumpe darauf reagiert, und
kein Erhöhen des Strafwerts einer Anforderung, die durch den Aktuator (V1, V2, V3, M1) weitergeleitet wird, ohne darauf zu reagieren.

8. Verfahren nach einem der Ansprüche 1 bis 7, umfassend adaptives Einrichten des Priorisierungsmechanismus durch Aktualisieren der Strafmatrix in folgendem Fall:
einer Änderung einer Topologie der Prozessanlage, oder
einer Übernahme einer Steuerung einer Feldkomponente durch einen Bediener der Prozessanlage, oder
einer Erzeugung einer neuen Anforderung durch eine Feldkomponente.

9. Verfahren nach einem der Ansprüche 1 bis 8, wobei in jedem durch die topologische Darstellung definierten Pfad das Weiterleiten einer Anforderung gestoppt wird, nachdem n Aktuatoren gefunden wurden, die in der Lage sind, auf die Anforderung zu reagieren, wobei n eine natürliche Zahl größer 1 ist.

10. Verfahren nach einem der Ansprüche 1 bis 9, wobei der Priorisierungsmechanismus als ein Softwaremodul implementiert wird, das auf einem übergeordneten System der Prozessanlage oder auf einer Edge-Vorrichtung oder auf einer der Feldkomponenten (206, 208, 222, 224, 226, 228, 230, 232, 234, 236) der Prozessanlage ausgeführt wird.

11. Verfahren nach einem der Ansprüche 1 bis 10, wobei das Zuweisen von Anforderungen zu zuständigen Agenten Verwenden der Strafe als eine Eingabe in eine gemischt-ganzzahlige Optimierungsroutine umfasst, um eine optimale Zuweisung der Anforderungen zu den zuständigen Agenten abzuleiten, um den Gesamtstrafwert zu minimieren, unter folgenden Einschränkungen:
alle Anforderungen erreichen mindestens einen zuständigen Agenten, und
kein zuständiger Agent wird mehr als einer Anforderung zugewiesen.

12. Verfahren nach einem der Ansprüche 1 bis 10, wobei das Zuweisen von Anforderungen zu zuständigen Agenten Folgendes umfasst:
Analysieren der Strafmatrix, um eine Mehrfacheingabe-Mehrfachausgabe-Bedingung zu identifizieren, wobei mehreren Anforderungen der gleiche Satz von zuständigen Agenten zugewiesen wird,
Anpassen der Strafmatrix durch Bündeln der mehreren Anforderungen als eine einzelne Anforderung und Bündeln des Satzes von zuständigen Agenten als einen einzelnen zuständigen Agenten,
Verwenden der angepassten Strafe als Eingabe in eine gemischt-ganzzahlige Optimierungsroutine, um eine optimale Zuweisung der Anforderungen zu den zuständigen Agenten abzuleiten, um den Gesamtstrafwert zu minimieren, unter folgenden Einschränkungen:
alle Anforderungen erreichen mindestens einen zuständigen Agenten, und
kein zuständiger Agent wird mehr als einer Anforderung zugewiesen.

13. Verfahren nach einem der Ansprüche 11 und 12, wobei die Zuweisung von Anforderungen zu zuständigen Agenten unter Verwendung der Strafmatrix auf einer Agentenebene durch jeden zuständigen Agenten durchgeführt wird, und wobei die gemischt-ganzzahlige Optimierungsroutine im Fall einer widersprüchlichen Zuweisung auf der Agentenebene ausgelöst wird.

14. Verfahren zum Automatisieren zumindest eines Teils einer Prozessanlage unter Verwendung eines Simulationsservers (238), wobei das Verfahren Folgendes umfasst:
Simulieren, durch den Simulationsserver (238), mehrerer als selbstorganisierende Agenten ausgelegter Feldkomponenten (206, 208, 222, 224, 226, 228, 230, 232, 234, 236) der Prozessanlage, wobei die als Agenten ausgelegten mehreren Feldkomponenten (206, 208, 222, 224, 226, 228, 230, 232, 234, 236) Aktuatoren (V1, V2, V3, M1) umfassen, wobei jeder Agent dazu ausgelegt ist, mit angrenzend physisch verbundenen Agenten zu kommunizieren,
Erfassen von Sensorsignalen von der Prozessanlage,
innerhalb der Simulation, Erzeugen von Anforderungen durch anfordernde Agenten, die jeweiligen aktuellen Bedürfnissen der anfordernden Agenten entsprechen, die aus den von der Prozessanlage erfassten Sensorsignalen abgeleitet werden,
innerhalb der Simulation, Weiterleiten jeder Anforderung von dem jeweiligen anfordernden Agenten an einen oder mehrere zuständige Agenten, die in der Lage sind, jeweils über einen oder mehrere Pfade auf die Anforderung zu reagieren, wobei die zuständigen Agenten die Aktuatoren (V1, V2, V3, M1) umfassen und ein Pfad als eine Kette von aneinandergrenzend physisch verbundenen Agenten definiert ist,
innerhalb der Simulation, Zuweisen der Anforderungen zu zuständigen Agenten basierend auf einem Priorisierungsmechanismus, wobei der Priorisierungsmechanismus unter Verwendung einer topologischen Darstellung der Prozessanlage durch einen Prozess eingerichtet wird, umfassend:
Zuweisen eines Strafwerts zu jeder Anforderung,
Weiterleiten der Anforderung über einen oder mehrere durch die topologische Darstellung definierte Pfade durch Bewerten eines Inkrements des Strafwerts an jedem Agenten, der die Anforderung weiterleitet oder auf diese reagiert, in Abhängigkeit von einer Art der Anforderung und/oder einer Art des Agenten,
wobei eine Strafmatrix erstellt wird, die angibt, wie hoch die Strafe wäre, wenn ein gegebener zuständiger Agent auf eine bestimmte Anforderung reagiert, und
Verwenden der Strafmatrix zum Zuweisen von Anforderungen zu zuständigen Agenten so, dass ein Gesamtstrafwert minimiert wird, wobei in jedem durch die topologische Darstellung definierten Pfad die Weiterleitung einer Anforderung an einem Aktuator (V1, V2, V3, M1) gestoppt wird, der in der Lage ist, auf die Anforderung zu reagieren, wobei ein Aktuator (V1, V2, V3, M1) dann als in der Lage betrachtet wird, auf die Anforderung zu reagieren, wenn der Aktuator (V1, V2, V3, M1) nicht bereits durch eine andere Anforderung mit einem niedrigeren Strafwert belegt ist oder die entsprechende Anforderung über einen anderen Pfad einen anderen Aktuator (V1, V2, V3, M1) erreicht hat, wobei der andere Aktuator (V1, V2, V3, M1) auf die entsprechende Anforderung mit einem niedrigeren Strafwert reagieren kann, und
Erzeugen geeigneter Aktuatorsignale als Reaktion auf die von der Prozessanlage erfassten Sensorsignale basierend auf der priorisierten Zuweisung von Anforderungen zu zuständigen Agenten unter Verwendung der Simulation.

15. Nicht-flüchtiges computerlesbares Speichermedium, das Anweisungen umfasst, die bei Verarbeitung durch einen Simulationsserver (238) den Simulationsserver (238) dazu auslegen, das Verfahren nach Anspruch 14 durchzuführen.

## Revendications

1. Procédé d'automatisation d'au moins une partie d'une installation de traitement comprenant une pluralité de composants de terrain (206, 208, 222, 224, 226, 228, 230, 232, 234, 236) configurés comme agents auto-organisateurs où la pluralité de composants de terrain (206, 208, 222, 224, 226, 228, 230, 232, 234, 236) configurés en tant qu'agents comprend des actionneurs (V1, V2, V3, M1), chaque agent étant configuré pour communiquer avec des agents connectés physiquement de façon adjacente, le procédé comprenant les étapes suivantes :
générer des requêtes par des agents demandeurs correspondant aux besoins actuels respectifs des agents demandeurs,
acheminer chaque requête de l'agent demandeur respectif vers un ou plusieurs agents responsables capables de réagir sur la requête par l'intermédiaire d'un ou plusieurs chemins dans chaque cas, les agents responsables comprenant les actionneurs (V1, V2, V3, M1) et un chemin étant défini comme une chaîne d'agents connectés physiquement de manière adjacente, et
réagir aux requêtes par les agents responsables affectés sur la base d'un mécanisme de priorisation, le mécanisme de priorisation étant établi en utilisant une représentation topologique de l'installation de traitement par un processus comprenant les étapes suivantes :
attribuer une valeur de pénalité à chaque requête,
acheminer la requête par un ou plusieurs chemins définis par la représentation topologique en évaluant un incrément de la valeur de pénalité au niveau de chaque agent qui achemine ou réagit à la requête en fonction d'un type de la requête et/ou d'un type de l'agent,
où une matrice de pénalité est créée indiquant le niveau de pénalité qui serait encouru si une requête particulière était traitée par un agent responsable donné, et
utiliser la matrice de pénalité pour attribuer des requêtes à des agents responsables de sorte qu'une valeur de pénalité totale soit minimisée, dans chaque chemin défini par la représentation topologique, l'acheminement d'une requête étant arrêté au niveau d'un actionneur (V1, V2, V3, M1) capable de réagir à la requête, où un actionneur (V1, V2, V3, M1) est considéré comme capable de réagir à la requête si l'actionneur (V1, V2, V3, M1) n'est pas déjà occupé par une autre requête à une valeur de pénalité moindre, ou la requête correspondante a atteint un autre actionneur (V1, V2, V3, M1), par l'intermédiaire d'un autre chemin, où ledit autre actionneur (V1, V2, V3, M1) peut réagir à la requête correspondante à une valeur de pénalité inférieure.

2. Procédé selon la revendication 1, dans lequel
chaque composant de terrain configuré en tant qu'agent comprend des informations sur d'autres agents auxquels il est physiquement connecté de manière adjacente ; ou
l'installation de traitement comprend en outre un serveur superordonné, qui comprend une représentation topologique de l'installation de traitement, et fournit à chaque agent des informations sur ses voisins physiques.

3. Procédé selon l'une quelconque des revendications 1 et 2, dans lequel la requête comprend des informations concernant l'agent dont elle provient et le chemin par lequel les informations ont été reçues.

4. Procédé selon l'une quelconque des revendications 1 à 3, dans lequel la pluralité de composants de terrain (206, 208, 222, 224, 226. 228, 230, 232, 234, 236) configurés comme agents comprennent en outre des capteurs (S1, S2, S3 et S4).

5. Procédé selon la revendication 4, dans lequel les agents demandeurs comprennent les capteurs (S1, S2, S3 et S4), et dans lequel chaque requête est générée sur la base d'un écart d'une valeur mesurée par rapport à un point de consigne, où le point de consigne est défini par un opérateur de l'installation de traitement ou, de manière automatisée, par un système superordonné de l'installation de traitement.

6. Procédé selon l'une quelconque des revendications 4 et 5, dans lequel la pluralité de composants de terrain (206, 208, 222, 224, 226. 228, 230, 232, 234, 236) configurés comme agents comprennent en outre des nœuds de canalisation (N1, N2, N3, N4, N5, N6), au moins une partie des nœuds de canalisation (N1, N2, N3, N4, N5, N6) de l'installation de traitement étant configurés en tant qu'agents capables de traduire les requêtes reçues d'agents physiquement connectés de manière adjacente et de transmettre les requêtes traduites à d'autres agents physiquement connectés de manière adjacente,
la traduction d'une requête reçue étant fonction du type de la requête reçue respective et du type de nœud de canalisation respectif (N1, N2, N3, N4, N5, N6).

7. Procédé selon la revendication 6, dans lequel l'évaluation d'un incrément de la valeur de pénalité au niveau de chaque agent qui transmet ou réagit à la requête en fonction du type de la requête et/ou du type de l'agent, comprend les étapes suivantes :
pour un capteur (S1, S2, S3, et S4), ne pas augmenter la valeur de pénalité d'une requête si le capteur transmet la requête,
pour un nœud de canalisation (N1, N2, N3, N4, N5, N6), augmenter la valeur de pénalité d'une requête si la requête est transmise d'une conduite principale à deux ou plusieurs branches de conduite,
pour un actionneur (V1, V2, V3, M1),
si l'actionneur (V1, V2, V3) est une vanne, alors ne pas augmenter la valeur de pénalité d'une requête de débit massique si la vanne réagit à celle-ci, et augmenter la valeur de pénalité d'une requête de pression si la vanne réagit à celle-ci,
si l'actionneur (M1) est une pompe, alors ne pas augmenter la valeur de pénalité d'une requête de pression si la pompe réagit à celle-ci, et augmenter la valeur de pénalité d'une requête de débit massique si la pompe réagit à celle-ci, et
ne pas augmenter la valeur de pénalité d'une requête qui est transmise par l'actionneur (V1, V2, V3, M1) sans avoir réagi à celle-ci.

8. Procédé selon l'une quelconque des revendications 1 à 7, comprenant d'établir de façon adaptative le mécanisme de priorisation en mettant à jour la matrice de pénalités dans les cas suivants :
une topologie de l'installation de traitement est en cours de modification, ou
le contrôle d'un composant de terrain est pris par un opérateur de l'installation de traitement, ou
une nouvelle requête est générée par un composant de terrain.

9. Procédé selon l'une quelconque des revendications 1 à 8, dans lequel, dans chaque chemin défini par la représentation topologique, l'envoi d'une requête est arrêté après avoir trouvé n actionneurs capables de réagir à la requête, n étant un nombre naturel supérieur à 1.

10. Procédé selon l'une quelconque des revendications 1 à 9, dans lequel le mécanisme de priorisation est mis en œuvre sous la forme d'un module logiciel fonctionnant sur un système superordonné de l'installation de traitement, ou sur un dispositif périphérique, ou sur l'un des composants de terrain (206, 208, 222, 224, 226, 228, 230, 232, 234, 236) de l'installation de traitement.

11. Procédé selon l'une quelconque des revendications 1 à 10, dans lequel l'affectation de requêtes à des agents responsables comprend l'utilisation de la pénalité comme entrée dans une routine d'optimisation en nombres entiers mixtes pour déduire une affectation optimale des requêtes aux agents responsables afin de minimiser la valeur de pénalité totale, sous réserve des contraintes suivantes :
toutes les requêtes parviennent à au moins un agent responsable, et
aucun agent responsable n'est affecté à plus d'une requête.

12. Procédé selon l'une quelconque des revendications 1 à 10, dans lequel l'affectation de requêtes à des agents responsables comprend les étapes suivantes :
analyser la matrice de pénalité pour identifier une condition à entrées multiples-sorties multiples, où une pluralité de requêtes se voient affecter le même ensemble d'agents responsables,
ajuster la matrice de pénalités en regroupant la pluralité de requêtes en une seule requête et en regroupant l'ensemble des agents responsables en un seul agent responsable,
utiliser la pénalité ajustée comme entrée d'une routine d'optimisation en nombres entiers mixtes pour déduire une affectation optimale des requêtes aux agents responsables afin de minimiser la valeur totale de pénalité, sous réserve des contraintes suivantes :
toutes les requêtes parviennent à au moins un agent responsable, et
aucun agent responsable n'est affecté à plus d'une requête.

13. Procédé selon l'une quelconque des revendications 11 et 12, dans lequel l'affectation de requêtes à des agents responsables en utilisant la matrice de pénalités est effectuée au niveau d'un agent par chaque agent responsable, et où la routine d'optimisation en nombres entiers mixtes est déclenchée dans le cas d'une affectation conflictuelle au niveau de l'agent.

14. Procédé d'automatisation d'au moins une partie d'une installation de traitement à l'aide d'un serveur de simulation (238), le procédé comprenant les étapes suivantes :
simuler, par le serveur de simulation (238), une pluralité de composants de terrain (206, 208, 222, 224, 226, 228, 230, 232, 234, 236) de l'installation de traitement configurés comme agents auto-organisateurs, où la pluralité de composants de terrain (206, 208, 222, 224, 226, 228, 230, 232, 234, 236) configurés en tant qu'agents comprend des actionneurs (V1, V2, V3, M1), chaque agent étant configuré pour communiquer avec des agents physiquement connectés de manière adjacente,
acquérir des signaux de capteur de l'installation de traitement,
dans la simulation, générer des requêtes par des agents demandeurs correspondant aux besoins actuels respectifs des agents demandeurs, qui sont dérivées des signaux de capteur acquis de l'installation de traitement,
dans la simulation, acheminer chaque requête de l'agent demandeur respectif vers un ou plusieurs agents responsables capables de réagir sur la requête par l'intermédiaire d'un ou plusieurs chemins dans chaque cas, les agents responsables comprenant les actionneurs (V1, V2, V3, M1) et un chemin étant défini comme une chaîne d'agents connectés physiquement de manière adjacente,
dans la simulation, attribuer des requêtes aux agents responsables sur la base d'un mécanisme de priorisation, le mécanisme de priorisation étant établi à l'aide d'une représentation topologique de l'installation de traitement par un processus comprenant les étapes suivantes :
attribuer une valeur de pénalité à chaque requête,
acheminer la requête par un ou plusieurs chemins définis par la représentation topologique en évaluant un incrément de la valeur de pénalité au niveau de chaque agent qui achemine ou réagit à la requête en fonction d'un type de la requête et/ou d'un type de l'agent,
où une matrice de pénalité est créée indiquant le niveau de pénalité qui serait encouru si une requête particulière était traitée par un agent responsable donné, et
utiliser la matrice de pénalité pour attribuer des requêtes à des agents responsables de sorte qu'une valeur de pénalité totale soit minimisée, dans chaque chemin défini par la représentation topologique, l'acheminement d'une requête étant arrêté au niveau d'un actionneur (V1, V2, V3, M1) capable de réagir à la requête, où un actionneur (V1, V2, V3, M1) est considéré comme capable de réagir à la requête si l'actionneur (V1, V2, V3, M1) n'est pas déjà occupé par une autre requête à une valeur de pénalité moindre, ou la requête correspondante a atteint un autre actionneur (V1, V2, V3, M1), par l'intermédiaire d'un autre chemin, où ledit autre actionneur (V1, V2, V3, M1) peut réagir à la requête correspondante à une valeur de pénalité inférieure, et
générer des signaux d'actionneur appropriés en réponse aux signaux de capteur acquis de l'installation de traitement, sur la base de l'affectation prioritaire de requêtes aux agents responsables à l'aide de la simulation.

15. Support de stockage, non transitoire, lisible par ordinateur comprenant des instructions qui, lorsqu'elles sont traitées par un serveur de simulation (238), configurent le serveur de simulation (238) pour réaliser le procédé selon la revendication 14.
